(19) Europäisches Patentamt
European Patent Office
Office européen des brevets

(11) **EP 2 792 081 B1**

(12) **EUROPEAN PATENT SPECIFICATION**

(45) Date of publication and mention
of the grant of the patent:
**22.11.2017 Bulletin 2017/47**

(21) Application number: **12806833.5**

(22) Date of filing: **13.12.2012**

(51) Int Cl.:
*H04B 5/00* (2006.01)　　*H02J 7/02* (2016.01)
*H02J 5/00* (2016.01)

(86) International application number:
**PCT/US2012/069574**

(87) International publication number:
**WO 2013/090623 (20.06.2013 Gazette 2013/25)**

(54) **SYSTEM AND METHOD FOR LOW LOSS WIRELESS POWER TRANSMISSION**

SYSTEM UND VERFAHREN FÜR VERLUSTARME DRAHTLOSE STROMÜBERTRAGUNG

SYSTÈME ET PROCÉDÉ DE TRANSMISSION ÉLECTRIQUE SANS FIL À FAIBLES PERTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2011 US 201161576885 P
12.09.2012 US 201213612633**

(43) Date of publication of application:
**22.10.2014 Bulletin 2014/43**

(73) Proprietor: **Qualcomm Incorporated
San Diego, CA 92121-1714 (US)**

(72) Inventors:
• **KASTURI, Sreenivas
San Diego, California 92121-1714 (US)**
• **GUPTA, Ashish
San Diego, California 92121-1714 (US)**
• **MCFARLAND, Michael K.
San Diego, California 92121-1714 (US)**

(74) Representative: **Tomkins & Co
5 Dartmouth Road
Dublin 6 (IE)**

(56) References cited:
**WO-A2-2009/050625　　WO-A2-2012/138949
DE-A1- 19 717 505　　US-A1- 2011 281 535**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD

The present invention relates generally to wireless power. More specifically, the disclosure is directed to a transmitting coil for low loss wireless power transmission.

## BACKGROUND

An increasing number and variety of electronic devices are powered via rechargeable batteries. Such devices include mobile phones, portable music players, laptop computers, tablet computers, computer peripheral devices, communication devices (e.g., Bluetooth devices), digital cameras, hearing aids, and the like. While battery technology has improved, battery-powered electronic devices increasingly require and consume greater amounts of power. As such, these devices constantly require recharging.

Rechargeable devices are often charged via wired connections through cables or other similar connectors that are physically connected to a power supply. Cables and similar connectors may sometimes be inconvenient or cumbersome and have other drawbacks. Wireless charging systems that are capable of transferring power in free space to be used to charge rechargeable electronic devices or provide power to electronic devices may overcome some of the deficiencies of wired charging solutions. As such, wireless power transfer systems and methods that efficiently and safely transfer power to electronic devices are desirable.

US 2011/281535 discusses systems directed to control of field distribution of a wireless power transmitter. A transmitter may include a transmit antenna configured to generate a field. The transmitter may further include least one parasitic antenna proximate the transmit antenna and configured to modify a distribution of the generated field.

## SUMMARY

Various implementations of systems, methods and devices within the scope of the appended claims each have several aspects, no single one of which is solely responsible for the desirable attributes described herein. Without limiting the scope of the appended claims, some prominent features are described herein.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

One aspect of the disclosure as described herein with reference to claim 1 provides a system for transmitting wireless power, comprising a first spiral coil and a second spiral coil. The first spiral coil includes a plurality of turns. A center of the first spiral coil to an outermost turn of the first spiral coil defines a first cross section. The second spiral coil includes a plurality of turns. A center of the second spiral coil to an outermost turn of the second spiral coil defines a second cross section. Portions of the first spiral coil along the first cross section and the second spiral coil along the second cross section have a mutual inductance with respect to a receive coil greater than 65% of a maximum mutual inductance along the first and second cross sections. The second spiral coil counter-wound relative to the first spiral coil.

Another aspect of the disclosure as described herein with reference to claim 9 provides a method for transmitting wireless power. The method includes driving with electrical current a first spiral coil that includes a plurality of turns. A center of the first spiral coil to an outermost turn of the first spiral coil defines a first cross section. The method further includes driving with electrical current a second spiral coil that includes a plurality of turns. A center of the second spiral coil to an outermost turn of the second spiral coil defines a second cross section. Portions of the first spiral coil along the first cross section and the second spiral coil along the second cross section have a mutual inductance with respect to a receive coil greater than 65% of a maximum mutual inductance along the first and second cross sections. The second spiral coil is counter-wound relative to the first spiral coil.

## BRIEF DESCRIPTION OF THE DRAWINGS

FIG. 1 is a functional block diagram of an exemplary wireless power transfer system, in accordance with exemplary embodiments.

FIG. 2 is a functional block diagram of exemplary components that may be used in the wireless power transfer system of FIG. 1, in accordance with various exemplary embodiments.

FIG. 3 is a schematic diagram of a portion of transmit circuitry or receive circuitry of FIG. 2 including a transmit or receive coil, in accordance with exemplary embodiments.

FIG. 4 is a functional block diagram of a transmitter that may be used in the wireless power transfer system of FIG. 1, in accordance with exemplary embodiments.

FIG. 5 is a functional block diagram of a receiver that may be used in the wireless power transfer system of FIG. 1, in accordance with exemplary embodiments.

FIG. 6 is a schematic diagram of single switching device differential drive amplifier in accordance with various aspects.

FIG. 7 illustrates an exemplary drive circuit in accordance with various aspects.

FIG. 8 illustrates an exemplary wireless power system including a wireless transmitter and a wireless receiver.

FIGS. 9 and 10 illustrate exemplary two coil arrangements for planar voltage co-location according to various aspects.

FIG. 11 illustrates an exemplary coil layout according to various aspects.

FIG. 12 illustrates another exemplary coil layout according to various aspects.

FIG. 13 illustrates a cross section of an exemplary coil arrangement.

FIG. 14 is a plot of normalized mutual inductance versus position for an exemplary coil arrangement.

FIG. 15 is a plot of normalized mutual inductance versus position for another exemplary coil arrangement.

The various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

DETAILED DESCRIPTION

The detailed description set forth below in connection with the appended drawings is intended as a description of exemplary embodiments of the invention and is not intended to represent the only embodiments in which the invention may be practiced. The term "exemplary" used throughout this description means "serving as an example, instance, or illustration," and should not necessarily be construed as preferred or advantageous over other exemplary embodiments. The detailed description includes specific details for the purpose of providing a thorough understanding of the exemplary embodiments of the invention. The exemplary embodiments of the invention may be practiced without these specific details. In some instances, well-known structures and devices are shown in block diagram form in order to avoid obscuring the novelty of the exemplary embodiments presented herein.

Wirelessly transferring power may refer to transferring any form of energy associated with electric fields, magnetic fields, electromagnetic fields, or otherwise from a transmitter to a receiver without the use of physical electrical conductors (e.g., power may be transferred through free space). The power output into a wireless field (e.g., a magnetic field) may be received, captured by, or coupled by a "receiving coil" to achieve power transfer.

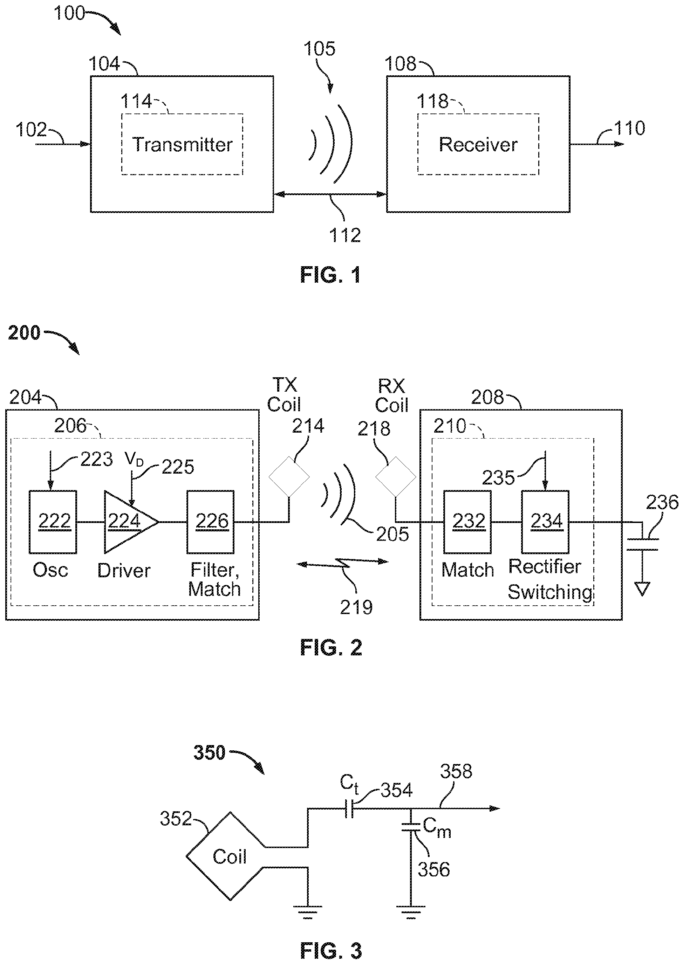

FIG. 1 is a functional block diagram of an exemplary wireless power transfer system 100, in accordance with exemplary embodiments of the invention. Input power 102 may be provided to a transmitter 104 from a power source (not shown) for generating a field 105 for providing energy transfer at a power level sufficient to charge or power a device (not shown). A receiver 108 may couple to the field 105 and generate output power 110 for storing or consumption by the device coupled to the output power 110. Both the transmitter 104 and the receiver 108 are separated by a distance 112. In one exemplary embodiment, transmitter 104 and receiver 108 are configured according to a mutual resonant relationship. When the resonant frequency of receiver 108 and the resonant frequency of transmitter 104 are substantially the same or very close, transmission losses between the transmitter 104 and the receiver 108 are minimal. As such, wireless power transfer may be provided over larger distance in contrast to purely inductive solutions that may require large coils that require coils to be very close (e.g., millimeters). Resonant inductive coupling techniques may thus allow for improved efficiency and power transfer over various distances and with a variety of inductive coil configurations.

The receiver 108 may receive power when the receiver 108 is located in an energy field 105 produced by the transmitter 104. The field 105 corresponds to a region where energy output by the transmitter 104 may be captured by a receiver 105. In some cases, the field 105 may correspond to the "near-field" of the transmitter 104 as will be further described below. The transmitter 104 may include a transmit coil 114 for outputting an energy transmission. The receiver 108 further includes a receive coil 118 for receiving or capturing energy from the energy transmission. The near-field may correspond to a region in which there are strong reactive fields resulting from the currents and charges in the transmit coil 114 that minimally radiate power away from the transmit coil 114. In some cases the near-field may correspond to a region that is within about one wavelength (or a fraction thereof) of the transmit coil 114. The transmit and receive coils 114 and 118 are sized according to applications and devices to be associated therewith. As described above, efficient energy transfer may occur by coupling a large portion of the energy in a field 105 of the transmit coil 114 to a receive coil 118 rather than propagating most of the energy in an electromagnetic wave to the far field. When positioned within the field 105, a "coupling mode" may be developed between the transmit coil 114 and the receive coil 118. The area around the transmit and receive coils 114 and 118 where this coupling may occur is referred to herein as a coupling-mode region.

FIG. 2 is a functional block diagram of exemplary components that may be used in the wireless power transfer system 100 of FIG. 1, in accordance with various exemplary embodiments of the invention. The transmitter 204 may include transmit circuitry 206 that may include an oscillator 222, a driver circuit 224, and a filter and matching circuit 226. The oscillator 222 may be configured to generate a signal at a desired frequency, such as 468.75 KHz, 6.78 MHz or 13.56 MHz, that may be adjusted in response to a frequency control signal 223. The oscillator signal may be provided to a driver circuit 224 configured to drive the transmit coil 214 at, for example, a resonant frequency of the transmit coil 214. The driver circuit 224 may be a switching amplifier configured to receive a square wave from the oscillator 222 and output a sine wave. For example, the driver circuit 224 may be a class E amplifier. A filter and matching circuit 226 may be also included to filter out harmonics or other unwanted frequencies and match the impedance of the transmitter 204 to the transmit coil 214.

The receiver 208 may include receive circuitry 210 that may include a matching circuit 232 and a rectifier and switching circuit 234 to generate a DC power output from an AC power input to charge a battery 236 as shown in FIG. 2 or to power a device (not shown) coupled to the receiver 108. The matching circuit 232 may be included to match the impedance of the receive circuitry 210 to the receive coil 218. The receiver 208 and transmitter 204 may additionally communicate on a separate communication channel 219 (e.g., Bluetooth, zigbee, cellular, etc). The receiver 208 and transmitter 204 may alternatively communicate via in-band signaling using characteristics of the wireless field 206.

As described more fully below, receiver 208, that may initially have a selectively disablable associated load (e.g., battery 236), may be configured to determine whether an amount of power transmitted by transmitter 204 and receiver by receiver 208 is appropriate for charging a battery 236. Further, receiver 208 may be configured to enable a load (e.g., battery 236) upon determining that the amount of power is appropriate. In some embodiments, a receiver 208 may be configured to directly utilize power received from a wireless power transfer field without charging of a battery 236. For example, a communication device, such as a near-field communication (NFC) or radio-frequency identification device (RFID may be configured to receive power from a wireless power transfer field and communicate by interacting with the wireless power transfer field and/or utilize the received power to communicate with a transmitter 204 or other devices.

FIG. 3 is a schematic diagram of a portion of transmit circuitry 206 or receive circuitry 210 of FIG. 2 including a transmit or receive coil 352, in accordance with exemplary embodiments of the invention. As illustrated in FIG. 3, transmit or receive circuitry 350 used in exemplary embodiments may include a coil 352. The coil may also be referred to or be configured as a "loop" antenna 352. The coil 352 may also be referred to herein or be configured as a "magnetic" antenna or an induction coil. The term "coil" is intended to refer to a component that may wirelessly output or receive energy for coupling to another "coil." The coil may also be referred to as an "antenna" of a type that is configured to wirelessly output or receive power. The coil 352 may be configured to include an air core or a physical core such as a ferrite core (not shown). Air core loop coils may be more tolerable to extraneous physical devices placed in the vicinity of the core. Furthermore, an air core loop coil 352 allows the placement of other components within the core area. In addition, an air core loop may more readily enable placement of the receive coil 218 (FIG. 2) within a plane of the transmit coil 214 (FIG. 2) where the coupled-mode region of the transmit coil 214 (FIG. 2) may be more powerful.

As stated, efficient transfer of energy between the transmitter 104 and receiver 108 may occur during matched or nearly matched resonance between the transmitter 104 and the receiver 108. However, even when resonance between the transmitter 104 and receiver 108 are not matched, energy may be transferred, although the efficiency may be affected. Transfer of energy occurs by coupling energy from the field 105 of the transmitting coil to the receiving coil residing in the neighborhood where this field 105 is established rather than propagating the energy from the transmitting coil into free space.

The resonant frequency of the loop or magnetic coils is based on the inductance and capacitance. Inductance may be simply the inductance created by the coil 352, whereas, capacitance may be added to the coil's inductance to create a resonant structure at a desired resonant frequency. As a non-limiting example, capacitor 352 and capacitor 354 may be added to the transmit or receive circuitry 350 to create a resonant circuit that selects a signal 356 at a resonant frequency. Accordingly, for larger diameter coils, the size of capacitance needed to sustain resonance may decrease as the diameter or inductance of the loop increases. Furthermore, as the diameter of the coil increases, the efficient energy transfer area of the near-field may increase. Other resonant circuits formed using other components are also possible. As another non-limiting example, a capacitor may be placed in parallel between the two terminals of the coil 350. For transmit coils, a signal 358 with a frequency that substantially corresponds to the resonant frequency of the coil 352 may be an input to the coil 352.

In one embodiment, the transmitter 104 may be configured to output a time varying magnetic field with a frequency corresponding to the resonant frequency of the transmit coil 114. When the receiver is within the field 105, the time varying magnetic field may induce a current in the receive coil 118. As described above, if the receive coil 118 is configured to be resonant at the frequency of the transmit coil 118, energy may be efficiently transferred. The AC signal induced in the receive coil 118 may be rectified as described above to produce a DC signal that may be provided to charge or to power a load.

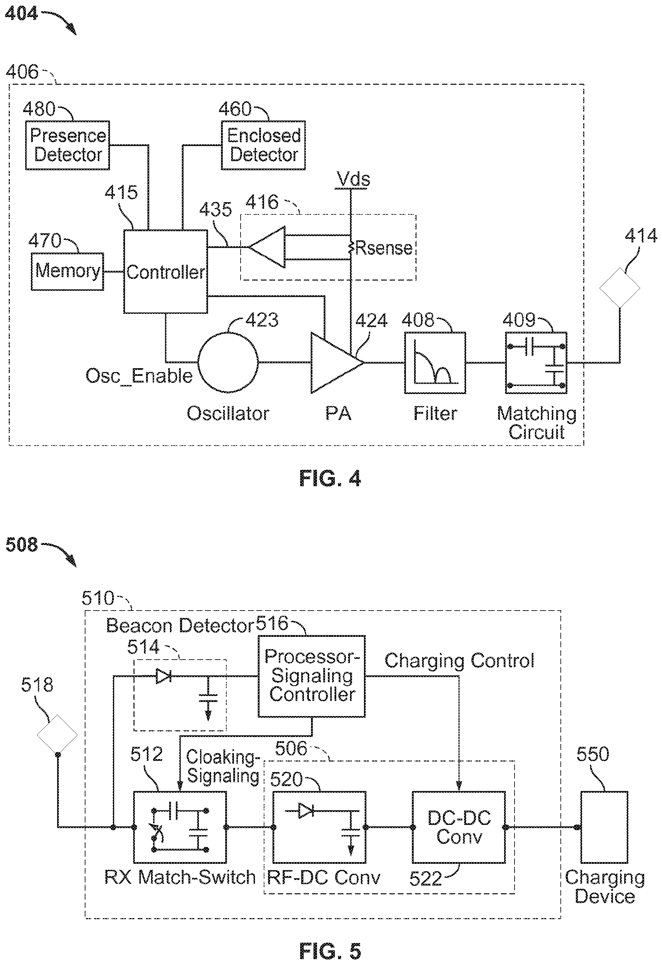

FIG. 4 is a functional block diagram of a transmitter 404 that may be used in the wireless power transfer system of FIG. 1, in accordance with exemplary embodiments of the invention. The transmitter 404 may include transmit circuitry 406 and a transmit coil 414. The transmit coil 414 may be the coil 352 as shown in FIG. 3. Transmit circuitry 406 may provide RF power to the transmit coil 414 by providing an oscillating signal resulting in generation of energy (e.g., magnetic flux) about the transmit coil 414. Transmitter 404 may operate at any suitable frequency. By way of example, transmitter 404 may operate at the 13.56 MHz ISM band.

Transmit circuitry 406 may include a fixed impedance matching circuit 409 for matching the impedance of the transmit circuitry 406 (e.g., 50 ohms) to the transmit coil 414 and a low pass filter (LPF) 408 configured to reduce harmonic emissions to levels to prevent self-jamming of devices coupled to receivers 108 (FIG. 1). Other exemplary embodiments may include different filter topologies, including but not limited to, notch filters that attenuate specific frequencies while passing others and may include an adaptive impedance match, that may be varied based on measurable transmit metrics, such as output power to the coil 414 or DC current drawn by the driver circuit 424. Transmit circuitry 406 further includes a driver circuit 424 configured to drive an RF signal as determined by an oscillator 423. The transmit circuitry 406 may be comprised of discrete devices or circuits, or alternately, may be comprised of an integrated assembly. An exemplary RF power output from transmit coil 414 may be on the order of 2.5 Watts.

Transmit circuitry 406 may further include a controller 415 for selectively enabling the oscillator 423 during transmit phases (or duty cycles) for specific receivers, for adjusting the frequency or phase of the oscillator 423, and for adjusting the output power level for implementing a communication protocol for interacting with neighboring devices through their attached receivers. It is noted that the controller 415 may also be referred to herein as processor 415. Adjustment of oscillator phase and related circuitry in the transmission path may allow for reduction of out of band emissions, especially when transitioning from one frequency to another.

The transmit circuitry 406 may further include a load sensing circuit 416 for detecting the presence or absence of active receivers in the vicinity of the near-field generated by transmit coil 414. By way of example, a load sensing circuit 416 monitors the current flowing to the driver circuit 424, that may be affected by the presence or absence of active receivers in the vicinity of the field generated by transmit coil 414 as will be further described below. Detection of changes to the loading on the driver circuit 424 are monitored by controller 415 for use in determining whether to enable the oscillator 423 for transmitting energy and to communicate with an active receiver. As described more fully below, a current measured at the driver circuit 424 may be used to determine whether an invalid device is positioned within a wireless power transfer region of the transmitter 404.

The transmit coil 414 may be implemented with a Litz wire or as an antenna strip with the thickness, width and metal type selected to keep resistive losses low. In a one implementation, the transmit coil 414 may generally be configured for association with a larger structure such as a table, mat, lamp or other less portable configuration. Accordingly, the transmit coil 414 generally may not need "turns" in order to be of a practical dimension. An exemplary implementation of a transmit coil 414 may be "electrically small" (i.e., fraction of the wavelength) and tuned to resonate at lower usable frequencies by using capacitors to define the resonant frequency.

The transmitter 404 may gather and track information about the whereabouts and status of receiver devices that may be associated with the transmitter 404. Thus, the transmit circuitry 406 may include a presence detector 480, an enclosed detector 460, or a combination thereof, connected to the controller 415 (also referred to as a processor herein). The controller 415 may adjust an amount of power delivered by the driver circuit 424 in response to presence signals from the presence detector 480 and the enclosed detector 460. The transmitter 404 may receive power through a number of power sources, such as, for example, an AC-DC converter (not shown) to convert conventional AC power present in a building, a DC-DC converter (not shown) to convert a conventional DC power source to a voltage suitable for the transmitter 404, or directly from a conventional DC power source (not shown).

As a non-limiting example, the presence detector 480 may be a motion detector utilized to sense the initial presence of a device to be charged that is inserted into the coverage area of the transmitter 404. After detection, the transmitter 404 may be turned on and the RF power received by the device may be used to toggle a switch on the Rx device in a pre-determined manner, which in turn results in changes to the driving point impedance of the transmitter 404.

As another non-limiting example, the presence detector 480 may be a detector capable of detecting a human, for example, by infrared detection, motion detection, or other suitable means. In some exemplary embodiments, there may be regulations limiting the amount of power that a transmit coil 414 may transmit at a specific frequency. In some cases, these regulations are meant to protect humans from electromagnetic radiation. However, there may be environments where a transmit coil 414 is placed in areas not occupied by humans, or occupied infrequently by humans, such as, for example, garages, factory floors, shops, and the like. If these environments are free from humans, it may be permissible to increase the power output of the transmit coil 414 above the normal power restrictions regulations. In other words, the controller 415 may adjust the power output of the transmit coil 414 to a regulatory level or lower in response to human presence and adjust the power output of the transmit coil 414 to a level above the regulatory level when a human is outside a regulatory distance from the electromagnetic field of the transmit coil 414.

As a non-limiting example, the enclosed detector 460 (may also be referred to herein as an enclosed compartment detector or an enclosed space detector) may be a device such as a sense switch for determining when an enclosure is in a closed or open state. When a transmitter is in an enclosure that is in an enclosed state, a power level of the transmitter may be increased.

In exemplary embodiments, a method by which the transmitter 404 does not remain on indefinitely may be used. In this case, the transmitter 404 may be programmed to shut off after a user-determined amount of time. This feature prevents the transmitter 404, notably the driver circuit 424, from running long after the wireless devices in its perimeter are fully charged. This event may be due to the failure of the circuit to detect the signal sent from either the repeater or the receive coil that a device is fully charged. To prevent the transmitter 404 from automatically shutting down if another device is placed in its perimeter, the transmitter 404 automatic shut off feature may be activated only after a set period of lack of motion detected in its perimeter. The user may be able to determine the inactivity time interval, and change it as desired. As a non-limiting example, the time interval may be longer than that needed to fully charge a specific type of wireless device under the assumption of the device being initially fully discharged.

FIG. 5 is a functional block diagram of a receiver 508 that may be used in the wireless power transfer system of FIG. 1, in accordance with exemplary embodiments of the invention. The receiver 508 includes receive circuitry 510 that may include a receive coil 518. Receiver 508 further couples to device 550 for providing received power thereto. It should be noted that receiver 508 is illustrated as being external to device 550 but may be integrated into device 550. Energy may be propagated wirelessly to receive coil 518 and then coupled through the rest of the receive circuitry 510 to device 550. By way of example, the charging device may include devices such as mobile phones, portable music players, laptop computers, tablet computers, computer peripheral devices, communication devices (e.g., Bluetooth devices), digital cameras, hearing aids (an other medical devices), and the like.

Receive coil 518 may be tuned to resonate at the same frequency, or within a specified range of frequencies, as transmit coil 414 (FIG. 4). Receive coil 518 may be similarly dimensioned with transmit coil 414 or may be differently sized based upon the dimensions of the associated device 550. By way of example, device 550 may be a portable electronic device having diametric or length dimension smaller that the diameter of length of transmit coil 414. In such an example, receive coil 518 may be implemented as a multi-turn coil in order to reduce the capacitance value of a tuning capacitor (not shown) and increase the receive coil's impedance. By way of example, receive coil 518 may be placed around the substantial circumference of device 550 in order to maximize the coil diameter and reduce the number of loop turns (i.e., windings) of the receive coil 518 and the inter-winding capacitance.

Receive circuitry 510 may provide an impedance match to the receive coil 518. Receive circuitry 510 includes power conversion circuitry 506 for converting a received RF energy source into charging power for use by the device 550. Power conversion circuitry 506 includes an RF-to-DC converter 520 and may also in include a DC-to-DC converter 522. RF-to-DC converter 520 rectifies the RF energy signal received at receive coil 518 into a non-alternating power with an output voltage represented by $V_{rect}$. The DC-to-DC converter 522 (or other power regulator) converts the rectified RF energy signal into an energy potential (e.g., voltage) that is compatible with device 550 with an output voltage and output current represented by $V_{out}$ and $I_{out}$. Various RF-to-DC converters are contemplated, including partial and full rectifiers, regulators, bridges, doublers, as well as linear and switching converters.

Receive circuitry 510 may further include switching circuitry 512 for connecting receive coil 518 to the power conversion circuitry 506 or alternatively for disconnecting the power conversion circuitry 506. Disconnecting receive coil 518 from power conversion circuitry 506 not only suspends charging of device 550, but also changes the "load" as "seen" by the transmitter 404 (FIG. 2).

As disclosed above, transmitter 404 includes load sensing circuit 416 that may detect fluctuations in the bias current provided to transmitter driver circuit 424. Accordingly, transmitter 404 has a mechanism for determining when receivers are present in the transmitter's near-field.

When multiple receivers 508 are present in a transmitter's near-field, it may be desirable to time-multiplex the loading and unloading of one or more receivers to enable other receivers to more efficiently couple to the transmitter. A receiver 508 may also be cloaked in order to eliminate coupling to other nearby receivers or to reduce loading on nearby transmitters. This "unloading" of a receiver is also known herein as a "cloaking." Furthermore, this switching between unloading and loading controlled by receiver 508 and detected by transmitter 404 may provide a communication mechanism from receiver 508 to transmitter 404 as is explained more fully below. Additionally, a protocol may be associated with the switching that enables the sending of a message from receiver 508 to transmitter 404. By way of example, a switching speed may be on the order of 100 μsec.

In an exemplary embodiment, communication between the transmitter 404 and the receiver 508 refers to a device sensing and charging control mechanism, rather than conventional two-way communication (i.e., in band signaling using the coupling field). In other words, the transmitter 404 may use on/off keying of the transmitted signal to adjust whether energy is available in the near-field. The receiver may interpret these changes in energy as a message from the transmitter 404. From the receiver side, the receiver 508 may use tuning and detuning of the receive coil 518 to adjust how much power is being accepted from the field. In some cases, the tuning and de-tuning may be accomplished via the switching circuitry 512. The transmitter 404 may detect this difference in power used from the field and interpret these changes as a message from the receiver 508. It is noted that other forms of modulation of the transmit power and the load behavior may be utilized.

Receive circuitry 510 may further include signaling detector and beacon circuitry 514 used to identify received energy fluctuations, that may correspond to informational signaling from the transmitter to the receiver. Furthermore, signaling and beacon circuitry 514 may also be used to detect the transmission of a reduced RF signal energy (i.e., a beacon signal) and to rectify the reduced RF signal energy into a nominal power for awakening either un-powered or power-depleted circuits within receive circuitry 510 in order to configure receive circuitry 510 for wireless charging.

Receive circuitry 510 further includes processor 516 for coordinating the processes of receiver 508 described herein including the control of switching circuitry 512 described herein. Cloaking of receiver 508 may also occur upon the occurrence of other events including detection of an external wired charging source (e.g., wall/USB power) providing charging power to device 550. Processor 516, in addition to controlling the cloaking of the receiver, may also monitor beacon circuitry 514 to determine a beacon state and extract messages sent from the transmitter 404. Processor 516 may also adjust the DC-to-DC converter 522 for improved performance.

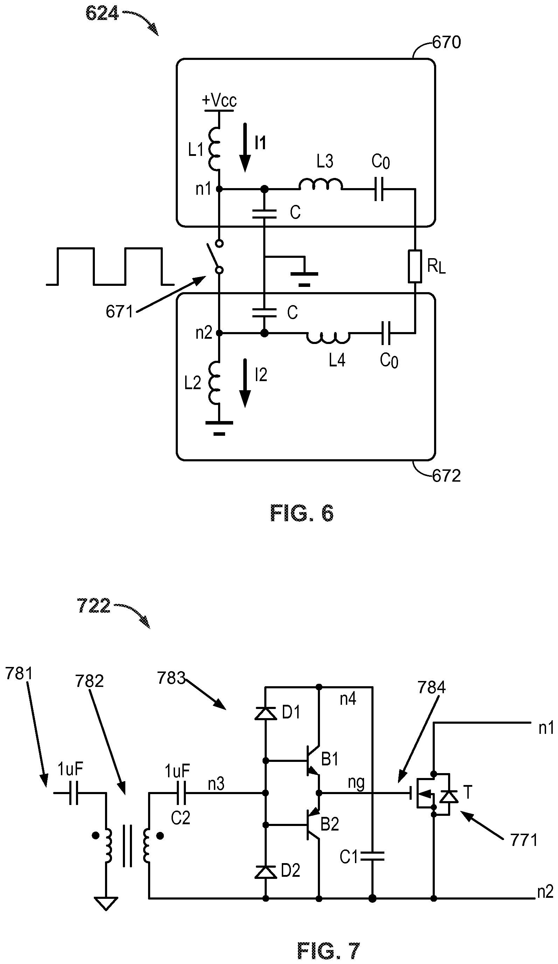

FIG. 6 depicts a schematic diagram of an exemplary single switching device differential drive amplifier 624 according to some aspects. In certain aspects, the differential drive amplifier 624 can correspond to the driver circuit 224 of FIG. 2. The amplifier 624 includes an upper RLC (resistor/inductor/capacitor) network 670 connected to a supply voltage (+Vcc), and a lower RLC network 672 connected to ground. The upper network 670 and the lower network 672 share a switching device 671, which floats between the two networks. The switching device 671 may receive a control or drive signal that may control the switching operations of the switching device 671. The switching device 671 may also define two output nodes n1 and n2, where differential output signals are respectively present. The control or drive signal may cause the switching device to alter its conductive state. In this manner, differential output signals may be produced at node n1 and node n2 that are substantially equal and opposite with respect to each other.

The upper RLC network 670 may be matched with the lower RLC network 672, such that the characteristics (e.g., resistances, capacitances, inductances, and the like) of the components of the networks are substantially identical. According to some example embodiments, the switching device 671 may be connected between inductors (also referred to as windings or coils) L1 and L2, which may be matched and tightly coupled. The inductors L3 and L4 may also be matched and tightly coupled.

As used herein, the term "float" may be used to indicate that a device is not connected to a fixed potential (e.g., +Vcc or ground). For example, a device may be floating if it is connected through non-zero impedance components, such as inductors or capacitors to a fixed potential. As such, the potential at a terminal of a floating component may tend to wander or float with respect to a fixed potential.

The switching device 671, which may be embodied as a transistor (e.g., a field effect transistor or the like), may switch open or closed in response to a control or drive signal, such as the square wave depicted in FIG. 6. According to various example embodiments, the currents I1 and I2 in the upper and lower networks are in opposite directions in the respective networks. As result of the switching operations performed by the switching device 671 and currents I1 and I2, differential output signals may be generated at nodes n1 and n2. Due to the coupling effect of the L3 inductor with the L4 inductor, the differential output signals generated at nodes n1 and n2 may interact to eliminate noise present in the input signal. As such, the load RL may receive a signal having an associated reduction in both conducted and radiated noise.

As stated above, the coupling between inductors L3 and L4, may facilitate the reduction in noise provided by the amplifier. To maximize noise cancellation, inductors L3 and L4 may be positioned as close together as possible so that the inductors are strongly coupled. In practice, a designer may desire to come as close to the hypothetical case of complete noise cancellation, while still avoiding the perfect cancellation of signals. According to some example embodiments, a pair of strongly coupled inductors may be used that are combined in a single package, such as the Coiltronix DRQ127-470-R, which results in the inductors being as closely coupled as possible. As a result of the strong coupling, the current in each of the inductors may be forced to be almost equivalent in value, facilitating the generation of the inversely oriented signals. According to example embodiments where the inductors are not included in the same package (e.g., a wireless power system), the inductors L3 and L4 may be inter-wounded coils used for transmitting wireless power to one or more secondary coils and may utilize strong coupling by maintaining the inductors in close proximity.

FIG. 7 illustrates a drive circuit 722 in accordance with some example embodiments. In certain aspects, the driver circuit 722 can correspond to the oscillator 222 of FIG. 2. The drive circuit 722 may receive an input signal at 781 and provide a drive signal at 784 to the gate of the switching device 771. The drive signal at 784 may be generated via a gate drive transformer 782 and an h-bridge network 783. According to some example embodiments, to generate the drive signal at 784 for a switching device, an isolated drive scheme may be implemented using the transformer 782. According to some example embodiments, the transformer 782 may be a pulse transformer. The transformer 782 may sense the voltage difference across its input terminals and apply the same voltage across its output terminals. By connecting the output terminals of the transformer 782 across the gate and source of the switching device 771, switching may be performed even though the source and the drain are floating between n1 and n2.

In some example embodiments, the switching device 771 may be designed to switch at a rapid speed, which may require a rapidly changing drive signal at the gate of the switching device. To achieve the rapidly changing drive signal, the h-bridge circuit 783 may be utilized. Referring to FIG. 6, the h-bridge circuit 783 may include diodes, D1 and D2, and bipolar junction transistors (BJTs), B1 and B2. The diodes and the capacitors, C1 and C2, may form a voltage doubler circuit, which may be used to generate a direct current (DC) voltage across nodes n4 and n2. The BJTs may be set in a push-pull configuration to drive the gate of switching device 771 using this DC voltage. A push-pull configuration may rely on several inherent characteristics of BJTs. B1 may be a PNP transistor and act as a closed switch between the collector (connected to node n4) and emitter (connected to node ng), while the BJTs base voltage (connected to node n3) may be higher than the voltage at the emitter. On the other hand, B2 may be an NPN transistor and act as a closed switch between its collector (connected to node n2) and emitter (connected to node ng) while its base voltage (connected to node n3) may be lower than the voltage at the emitter. When not operating as a closed switch both B1 and B2 may act as open switches.

When the transformer forces node n3's voltage higher than the voltage at node n2, B1 may sense a positive voltage between its base and emitter terminals resulting in current flowing from the capacitor C1 to the gate of switching device 771. Likewise, B2 may sense the lower voltage between its base and its emitter causing the gate of switching device 71 to discharge to node n2. As a result, the h-bridge 783 provides for fast ramp up and ramp down of the voltage of the signal at the gate of switching device 771 (with respect to the source) thereby allowing for rapid switching.

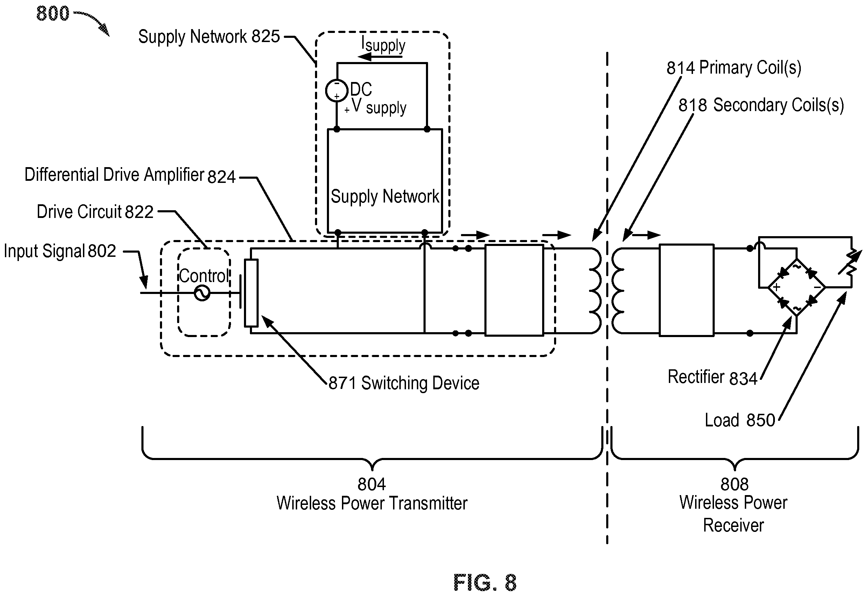

FIG. 8 depicts an example wireless power system 800 in accordance with various aspects. The wireless power system of FIG. 8 may include a wireless power transmitter 804 and a wireless power receiver 808. The wireless power transmitter 804 may include a differential drive amplifier 824, which, in turn, may include a single switching device 871 and a drive circuit 822. In certain aspects, the drive circuit 822 and the differential drive amplifier 824 may correspond to the driver circuit 722 and the differential drive amplifier 624 of FIGS. 6 and 7, respectively. The drive circuit 822 may receive an input signal 802. The wireless power transmitter 804 may also include a supply network 825 and primary coils 814. The wireless power receiver 808 may include secondary coils 818, a rectifier 834, and a load 850, which may be a dynamic load. In some example embodiments, the load 850 may be rechargeable battery for an electronic device.

According to various aspects, the wireless power system of FIG. 8 implements switching operations to convert a DC voltage provided by the supply network 825 into a high frequency signal. The differential drive amplifier 824 may operate, as described above, to generate two high frequency output signals that are differential and substantially equal and opposite. The differential output signals may be delivered to respective primary coils that are positioned to provide for noise cancellation through a coupling of the primary coils 814. The primary coils 814 may be oriented such that the currents in the coils flow in the same direction, thereby providing for noise cancellation while also having a minimal effect on the magnetic field generation of the primary coils 814. Due to the direction of the current, magnetic fields may be generated that have the same polarity. The magnetic field may induce a current in the one or more secondary coils of the wireless power receiver 818. The one or more secondary coils 818 may receive an induced alternating current (AC) signal, which may then be rectified, via the rectifier 834, and fed to a load 850.

According to some aspects, the primary coils 814 may be configured to facilitate noise cancellation by co-locating substantially equal and opposite voltages at any location on a planar surface defined by the primary coils 814. According to some example embodiments, the primary coils 814 may be configured to co-locate substantially equal and opposite voltages at any location in a three-dimensional space surrounding the primary coil network. According to various example embodiments the primary coils 814 may be driven by differential output signals as described above. However, according to some example embodiments, the primary coil arrangements and configurations described herein may be utilized in conjunction with any type of differential drive amplifier, including but not limited to a single switching device differential drive amplifier as described herein. For example, the primary coil arrangements and configurations may be used with a differential drive amplifier that includes multiple switching devices and/or transistors.

With respect to the positional configuration of the primary coils 814, each primary coil may be wound as a spiral on a geometric plane. To facilitate co-location of voltages, the distance between each turn of a coil may be increased as the spiral configuration moves towards the center of an area. The first coil and the second coil may therefore have a spiral configuration substantially within a common plane that provides for co-location of substantially equal and opposite voltages within the first and second coils, respectively, at any location on the common plane. According to some example embodiments, a single coil may be utilized that spirals into a center point or area, and then spirals back out. As such, a coil arrangement may be constructed of two coils that are connected at a central location to achieve a single coil embodiment.

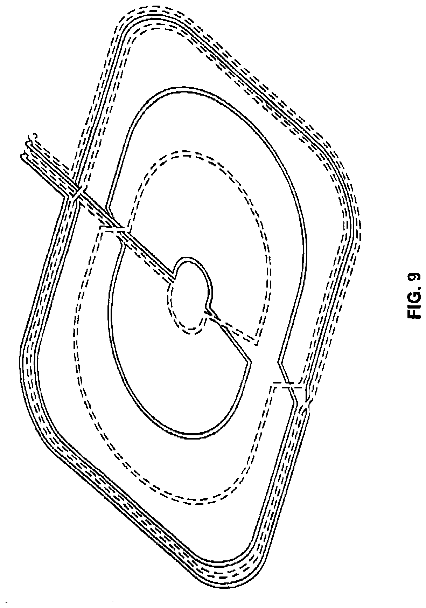

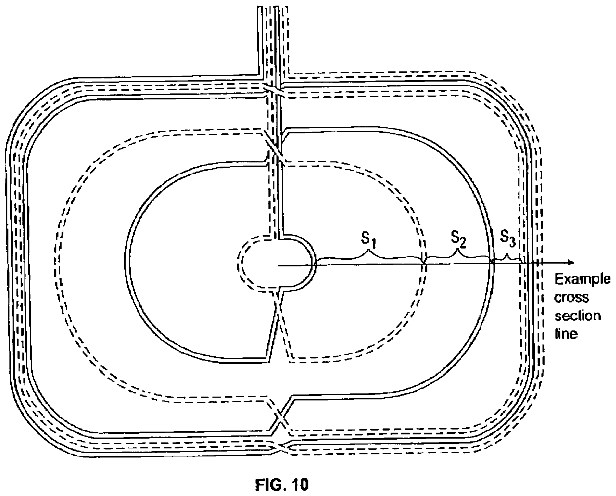

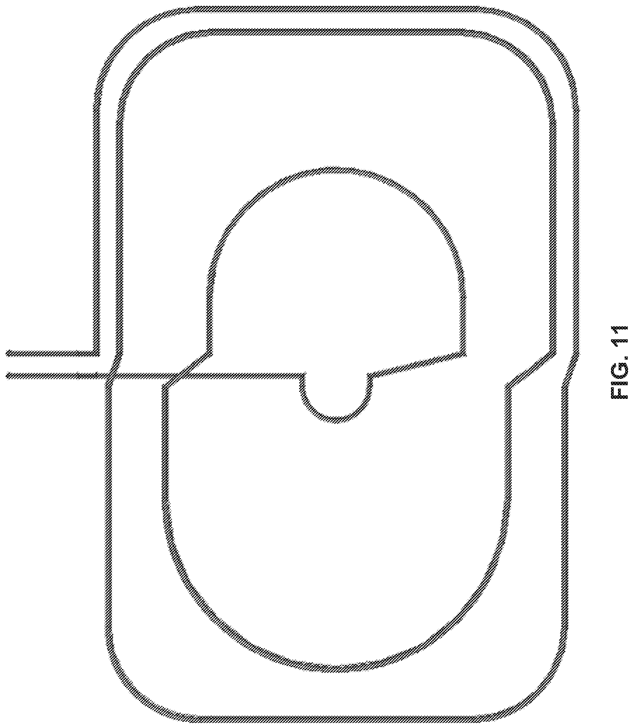

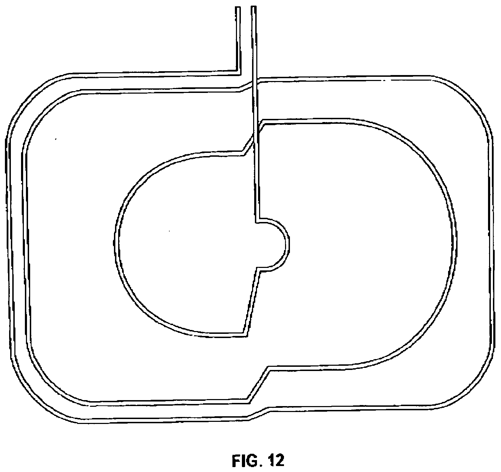

FIG. 9 illustrates a perspective view of an exemplary two coil arrangement according to various aspects. FIG. 10 illustrates a top view of an exemplary two coil arrangement according to various example aspects. FIG. 11 illustrates a top view of the aspect of FIG. 10 with only a first coil depicted, and FIG. 12 illustrates a top view of the aspect of FIG. 10 with only a second coil depicted.

In some aspects, the primary coils 814 of FIG. 8 may be formed as the two coil structures of FIGS. 9 and 10. Each coil may be driven by a signal that is substantially equal and opposite relative to a signal driving the other coil. One coil may be wound counterclockwise while the other coil may be wound clockwise. One coil may be substantially a reflection of the other coil and have a same total length as the other coil. The two coils may be configured together to create a single coil structure by placing one coil above, below, or interwove the other coil. The two coil arrangements of FIGS. 9 and 10, for instance, may form a single coil structure where the coils are located substantially on a common plane and have a common center. In some aspects, a single coil structure may instead include one coil or three or more coils. In certain aspects, the single coil structure may further be used as a receiver coil such as secondary coils 818 of FIG. 8.

A single coil structure may be non-planar in some aspects and planar with a flexible plane in other aspects. The single coil structure may be any symmetric shape, including rectangle or circle, for example. The single coil structure may be oriented in various orientations including vertical, horizontal, and diagonally, among other possibilities. Further, the single coil structure may be located on or in a variety of items including surfaces, walls, tape, and portable electronics, among other possibilities.

In some aspects, the portion of a single coil structure used to input in the signal to each coil may feed in from a location other than a corner along the edge of the single coil structure. For example, the signal may be input perpendicular to the top side of the single coil structure along a top-center edge as illustrated in FIG. 10.

Each corner of a single coil structure may have a minimum turn radius. In particular aspects, the minimum turn radius may be approximately 5 millimeters. The minimum turn radius may be greater or less in other aspects.

A receive coil, such as secondary coils 818 of FIG. 8, may be placed above or below a perimeter or inside area of the single coil structure. The receive coil may be a first distance from one coil of the single coil structure and a second distance from another coil of the single coil structure. In some aspects, the first and second distances may each be between a range of between 3 millimeters to 40 millimeters. In other aspects, the first and second distances may be less than 3 millimeters or greater than 40 millimeters. In addition, in some aspects, the first distance may equal the second distance so that the first and second coils of the single coil structure may be closely located and substantially located on a common plane.

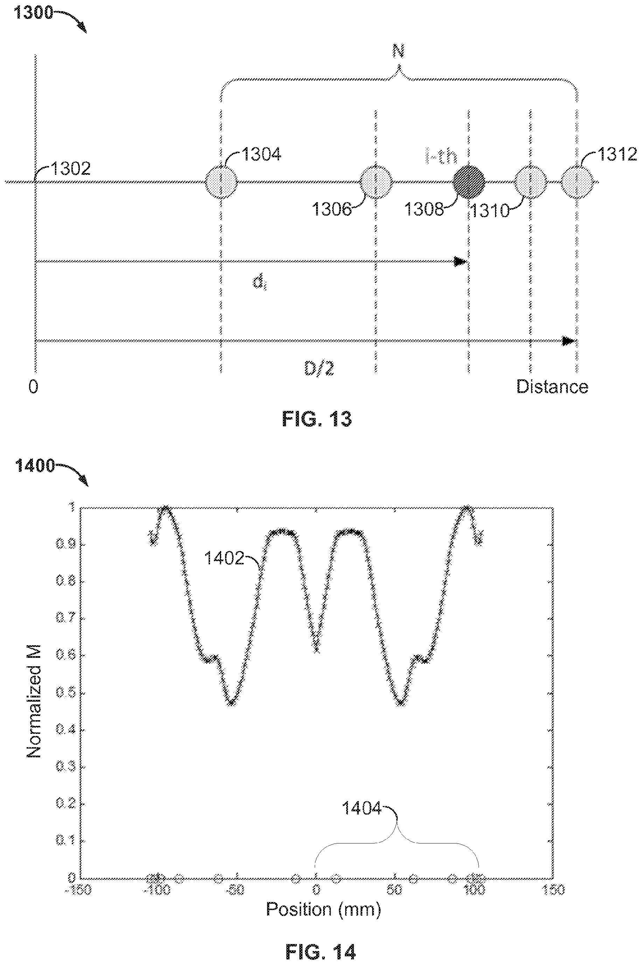

FIG. 13 illustrates a side view of an example cross section 1300 of a single coil structure from a center 1302 to an outermost turn 1312 (i.e., the fifth turn) of the single coil structure. The spacings between consecutive turns of the single coil structure may be represented as variables and determined as a function of distance along the cross section of the single coil structure from the center 1302 to the outermost turn 1312. The illustrated single coil structure includes N turns (i.e., five turns), including a first turn 1304, second turn 1306, third turn 1308, fourth turn 1310, and outermost turn 1312. The distance from the center 1302 to an i-th turn (e.g., the third turn) is denoted as $d_i$, and the distance from the center 1302 to the center of the outermost turn 1312 is denoted as D/2.

In some aspects, the distance $d_i$ along a cross section from the center of a single coil structure to an i-th turn is given by the function of Equation 1.

$$\text{Equation 1:} \quad d_i = \frac{D}{2} \cdot \frac{1 - r^{i-1}}{1 - r^{N-1}}$$

where $\dfrac{D}{2}$ is a distance from the center to the outermost turn, $r$ is a value corresponding to spacings between turns of the single spiral structure, N is a sum of a total number of turns of the single spiral structure, and i is a number corresponding to the particular turn. In some aspects, Equation 1 additionally or alternatively describes a distance along a cross section from the center of one turn of a single coil structure to an i-th turn. Further, in some aspects, a distance along a cross section from the center of a single coil structure or the center of one turn of the single coil structure to an i-th turn is additionally or alternatively given by a function where the distance is proportional to D and i and inversely proportional to N.

As an example cross section line, FIG. 10 illustrates a top view of a cross section line drawn on a single coil structure. As illustrated, each coil of the single coil structure may share a common cross section line that is substantially located on a common plane. The cross section line alternately crosses six turns of the two-coil single coil structure, crossing three turns of each of the two coils. The spacings, such as spacings $S_1$, $S_2$, $S_3$, between consecutive turns generally increase from an outermost turn to the center of the single coil structure.

FIG. 14 is a plot 1400 of normalized mutual inductance versus position for an example single coil structure. The mutual inductance values 1402 in plot 1400 show the mutual inductance for a cross section 1404 of a single coil structure relative to a receive coil at positions 10 millimeters above the cross section. The mutual inductance values 1402 are normalized by a maximum mutual inductance of the positions along the cross section.

The receive coil used to construct the plot 1400 was a one turn coil having finite width of 44 millimeters where the field across the receive coil was averaged to determine a mutual inductance distribution. In addition, along the position axis, an illustrative side view of the cross section 1404 for each turn of the single coil structure is shown as multiple Os, providing a sense of the turns and spacings that resulted in the illustrated mutual inductance distribution.

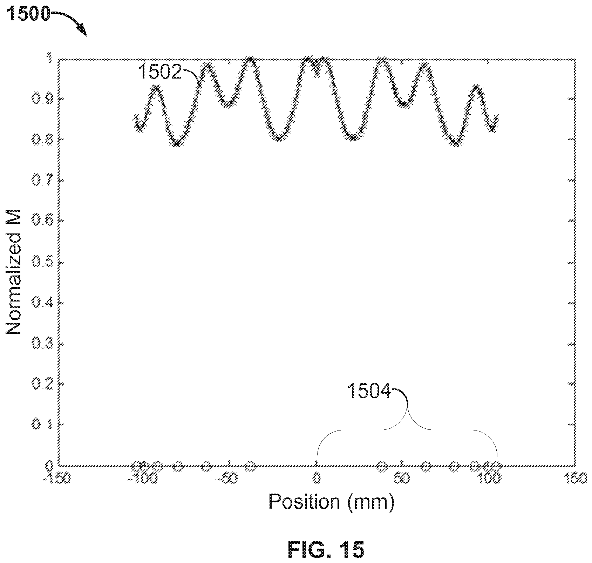

Similarly, FIG. 15 is a plot 1500 of normalized mutual inductance versus position for an example single coil structure. The mutual inductance values 1502 in plot 1500 show the mutual inductance for a cross section 1504 of a single coil structure relative to a receive coil at positions 10 millimeters above the cross section. The mutual inductance values 1502 are normalized by a maximum mutual inductance of the positions along the cross section. The receive coil used to construct the plot 1500 was a one turn coil having finite width of 44 millimeters where the field across the receive coil was averaged to determine a mutual inductance distribution. In addition, along the position axis, an illustrative side view of the cross section 1504 for each turn of the single coil structure is shown as multiple Os, providing a sense of the turns and spacings that resulted in the illustrated mutual inductance distribution.

By comparing the distributions of FIGS. 14 and 15, it can be noted that varying spacings between turns of a single coil structure results in variation between a maximum and minimum normalized mutual inductance of the distribution. Advantageously, less variation between the maximum and minimum normalized mutual inductance corresponds to increased uniformity in the magnetic field generated by the cross section of the single coil structure. As a result, spacings between turns of a single coil structure may be designed so that the minimum normalized mutual inductance exceeds a percentage of the maximum normalized mutual inductance along some or all cross sections of a primary coil structure. For instance, the spacings between turns may be selected so that a minimum normalized mutual inductance exceeds 50% or 65% of a maximum normalized mutual inductance along some or all cross sections of a single coil structure. Other minimum mutual inductance thresholds may be used in some aspects. Further, advantageously, in certain aspects, by applying minimum mutual inductance thresholds to various cross sections of a single coil structure, the single coil structure is formed to create a substantially uniform three-dimensional magnetic field at a distance above or below the single coil structure.

In some aspects, spacings between turns may be designed so that variation between the maximum and minimum normalized mutual inductance is substantially minimized. For example, the value of $r$ in Equation 1 may be solved or selected so that portions of the single coil structure along a cross section have a difference between a maximum and minimum normalized mutual inductance that varies less than for other values of $r$. In one aspect, the value of $r$ may be in the range of around 0.65 to 0.68 since a value of approximately 0.67 may result in a minimum difference between the maximum and minimum normalized mutual inductance. When the value of $r$ is approximately 0.67, a percentage difference between the maximum and minimum normalized mutual inductance along the cross section may be as low as approximately 21%.

The spacings between turns of a single coil structure may generally increase from an outermost turn to the center of the single coil structure. Such an increase in the spacings may enable generation of a substantially uniform magnetic field distribution above or below the single coil structure. Advantageously, in certain aspects, the substantially uniform magnetic field may be constructed without use of a parasitic loop, reducing losses due to added resistance from the parasitic loop. The distance from the single coil structure to where the substantially uniform magnetic field is strongest may be approximately 3 millimeters to 40 millimeters above or below the single coil structure in some aspects. Further, the single coil structure may be sized to produce a magnetic field sufficiently large to simultaneously charge more than one mobile phone. Given the exemplary aspects discussed in this disclosure, the uniform magnetic field may also permit devices to wirelessly receive power even above the outer edges of the primary coil structure.

The spacings between consecutive turns of a single coil structure may be designed to increase from an outermost turn to the center of the single coil structure, in part, so that alternating current resistances at high frequencies may be diminished. In certain aspects, such a design may be effective for decreasing resistance and corresponding energy losses at operating frequencies of about 6.78 MHz.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. The described functionality may be implemented in varying ways for each particular application, but such implementation decisions should not be interpreted as causing a departure from the scope of the embodiments of the invention.

The various illustrative blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art. A storage medium is coupled to the processor such that the processor can read information from, and write information to, the storage medium. In the alternative, the storage medium may be integral to the processor. Disk and disc, as used herein, includes compact disc (CD), laser disc, optical disc, digital versatile disc (DVD), floppy disk and blu ray disc where disks usually reproduce data magnetically, while discs reproduce data optically with lasers. Combinations of the above should also be included within the scope of computer readable media. The processor and the storage medium may reside in an ASIC. The ASIC may reside in a user terminal. In the alternative, the processor and the storage medium may reside as discrete components in a user terminal.

For purposes of summarizing the disclosure, certain aspects, advantages and novel features of the inventions have been described herein. It is to be understood that not necessarily all such advantages may be achieved in accordance with any particular embodiment of the invention. Thus, the invention may be embodied or carried out in a manner that achieves or optimizes one advantage or group of advantages as taught herein without necessarily achieving other advantages as may be taught or suggested herein.

Various modifications of the above described embodiments will be readily apparent, and the generic principles defined herein may be applied to other embodiments without departing from the scope of the invention as defined in the claims.

**Claims**

1. A transmitter (104, 204, 404, 804) for transmitting wireless power to a receive coil (118, 218, 518), comprising:

   a first spiral coil comprising a plurality of turns, a center of the first spiral coil to an outermost turn of the first spiral coil defining a first cross section; and
   a second spiral coil comprising a plurality of turns, a center of the second spiral coil to an outermost turn of the second spiral coil defining a second cross section, the second spiral coil counter-wound relative to the first spiral coil, wherein the first and second coil are substantially within a common plane, having a common center, **characterized in that** a turn distance from the common center to a particular turn along the first or second cross section of the first or second spiral coil is such that spacings between consecutive turns of the transmit coil increase from an outermost turn to the common center such that a mutual inductance with respect to the receive coil (118, 218, 518) located above or below the common plane is greater than 65% of a maximum mutual inductance along the first and second cross sections when the first and second spiral coils are positioned to wirelessly transmit power to the receive coil.

2. The transmitter (804) of Claim 1, wherein the second spiral coil is located above or below the first spiral coil or interwoven with the first spiral coil.

3. The transmitter (804) of any previous claim, wherein a total length of the second spiral coil is a same length as a total length of the first spiral coil, and the second spiral coil is substantially shaped as a reflection of the first spiral coil.

4. The transmitter (804) of any previous claims, wherein the turn distance from the common center to a center of a particular turn along the first or second cross section of the first or second spiral coil is a function of a distance from the common center to the outermost turn of the first or second spiral coil, a first value corresponding to spacings between turns of the first or second spiral coil, a sum of a total number of turns of the first and second spiral coils, and a first number corresponding to the particular turn.

**5.** The transmitter (104) of any previous claim, wherein the first and second spiral coil are electrically couplable to a driver circuit (224), substantially located on a common plane, and configured to wirelessly transmit power at a level sufficient to charge or power a receiver device.

**6.** The transmitter (104) of any of previous claim, wherein input signals for first and second spiral coil are configured to be within a frequency range of 6.5 Megahertz to 7 Megahertz.

**7.** The transmitter (104) of any previous claim, wherein each turn of the first and second spiral coil is configured to have a turn radius greater than a minimum turn radius of 5 millimeters.

**8.** A method for transmitting wireless power to a receive coil (118, 218,518), the method comprising:

driving with electrical current a first spiral coil comprising a plurality of turns, a center of the first spiral coil to an outermost turn of the first spiral coil defining a first cross section; and driving with electrical current a second spiral coil comprising a plurality of turns, a center of the second spiral coil to an outermost turn of the second spiral coil defining a second cross section, the second spiral coil counter-wound relative to the first spiral coil, wherein the first and second coil are substantially within a common plane, having a common center and charcterised by a turn distance from the common center to a particular turn along the first or second cross section of the first or second spiral coil is such that spacings between consecutive turns of the transmit coil increase from an outermost turn to the common center such that a mutual inductance with respect to the receive coil (118, 218,518) located above or below the common plane is greater than 65% of a maximum mutual inductance along the first and second cross sections when the first and second spiral coils are positioned to wirelessly transmit power to the receive coil

**9.** The method of Claim 8, wherein the second spiral coil is located above or below the first spiral coil or is interwoven with the first spiral coil.

**10.** The method of any of Claims 8 or 9, wherein a total length of the second spiral coil is a same length as a total length of the first spiral coil, and the second spiral coil is substantially shaped as a reflection of the first spiral coil.

**11.** The method of any of Claims 8 to 10, wherein the turn distance from the common center to a center of a particular turn along the first or second cross section of the first or second spiral coil is a function of a distance from the common center to the outermost turn of the first or second spiral coil, a first value corresponding to spacings between turns of the first or second spiral coil, a sum of a total number of turns of the first and second spiral coils, and a first number corresponding to the particular turn.

**12.** The method of any of Claims 8 to 11, wherein said driving the first and second spiral coils comprises driving the first and second spiral coils with electrical current using a driver circuit (224), and the first and second spiral coils are configured to be electrically coupled to the driver circuit (224), substantially located on a common plane, and configured to wirelessly transmit power at a level sufficient to charge or power a receiver device.

**13.** A non-transitory computer storage that stores executable program instructions that direct an apparatus for transmitting wireless power to a receive coil to implement the method according to any of claims 8 to 12 when executed by a processing module.

**14.** A wireless power system (100) for transmitting wireless power to a receive coil (118, 218,518), the system comprising the receive coil (118,218,518) and further comprising the transmitter according to any of claims 1 to 7.

**15.** The wireless power system (100) of claim 14 wherein the receive coil (118, 218,518) comprises a first receive coil and a second receive coil.

**Patentansprüche**

**1.** Ein Sender (104, 204, 404, 804) zum Senden von Drahtlosleistung an eine Empfangsspule (118, 218, 518), der Folgendes aufweist:

eine erste spiralförmige Spule, die eine Vielzahl von Windungen aufweist, wobei ein Mittelpunkt der ersten spiralförmigen Spule zu einer am weitesten außen liegenden Windung der ersten spiralförmigen Spule einen ersten Querschnitt definiert; und eine zweite spiralförmige Spule, die eine Vielzahl von Windungen aufweist, wobei ein Mittelpunkt der zweiten spiralförmigen Spule zu einer am weitesten außen liegenden Windung der zweiten spiralförmigen Spule einen zweiten Querschnitt definiert, wobei die zweite spiralförmige Spule entgegengesetzt gewunden ist relativ zu der ersten spiralförmigen Spule, wobei die ersten und zweiten Spulen im Wesentlichen innerhalb einer gemeinsamen Ebene vorliegen, einen gemeinsamen Mittelpunkt haben und **dadurch gekennzeichnet sind dass**

eine Windungsdistanz von dem gemeinsamen Mittelpunkt zu einer bestimmten Windung entlang des ersten oder zweiten Querschnittes der ersten oder zweiten spiralförmigen Spule derart vorliegt, dass Beabstandungen zwischen aufeinanderfolgenden Windungen der Sendespule von einer am weitesten außen liegenden Windung zu dem gemeinsamen Mittelpunkt zunehmen, so dass eine wechselseitige Induktivität in Bezug auf die Empfangsspule (118, 218, 518), die über oder unter der gemeinsamen Ebene angeordnet ist, größer als 65 % einer maximalen wechselseitigen Induktivität entlang der ersten und zweiten Querschnitte ist, wenn die ersten und zweiten spiralförmigen Spulen positioniert sind, um drahtlos Sendeleistung an die Empfangsspule zu übertragen.

2. Sender (804) nach Anspruch 1, wobei die zweite spiralförmige Spule über oder unter der ersten spiralförmigen Spule angeordnet ist oder mit der ersten spiralförmigen Spule verwoben ist.

3. Sender (804) nach einem vorhergehenden Anspruch, wobei eine Gesamtlänge der zweiten spiralförmigen Spule eine gleiche Länge ist wie eine Gesamtlänge der ersten spiralförmigen Spule, und die zweite spiralförmige Spule im Wesentlichen als eine Spiegelung der ersten spiralförmigen Spule gestaltet ist.

4. Sender (804) nach einem der vorhergehenden Ansprüche, wobei die Windungsdistanz von dem gemeinsamen Mittelpunkt zu einem Mittelpunkt einer bestimmten Windung entlang des ersten oder zweiten Querschnittes der ersten oder zweiten spiralförmigen Spule eine Funktion ist von einer Distanz von dem gemeinsamen Mittelpunkt zu der am weitesten außen liegenden Windung der ersten oder zweiten spiralförmigen Spule, einem ersten Wert, der Beabstandungen zwischen Windungen der ersten oder zweiten spiralförmigen Spule entspricht, einer Summe einer Gesamtanzahl von Windungen der ersten und zweiten spiralförmigen Spulen und einer ersten Zahl, die der bestimmten Windung entspricht.

5. Sender (104) nach einem vorhergehenden Anspruch, wobei die erste und zweite spiralförmige Spule elektrisch an eine Treiberschaltung (224) koppelbar sind, im Wesentlichen in einer gemeinsamen Ebene angeordnet sind und konfiguriert sind zum drahtlosen Senden von Leistung mit einem Pegel, der zum Laden oder Betreiben einer Empfängereinrichtung ausreichend ist.

6. Sender (104) nach einem vorhergehenden Anspruch, wobei Eingabesignale für die erste und zweite spiralförmige Spule konfiguriert sind, so dass sie innerhalb eines Frequenzbereiches von 6,5 Megahertz bis 7 Megahertz sind.

7. Sender (104) nach einem vorhergehenden Anspruch, wobei jede Windung der ersten und zweiten spiralförmigen Spule konfiguriert ist, so dass sie einen Windungsradius hat, der größer ist als ein minimaler Windungsradius von 5 Millimetern.

8. Ein Verfahren zum Senden von drahtloser Leistung an eine Empfangsspule (118, 218, 518), wobei das Verfahren Folgendes aufweist:

Betreiben, mit elektrischem Strom, einer ersten spiralförmigen Spule, die eine Vielzahl von Windungen aufweist, wobei ein Mittelpunkt der ersten spiralförmigen Spule zu einer am weitesten außen gelegenen Windung der ersten spiralförmigen Spule einen ersten Querschnitt definiert; und

Betreiben, mit elektrischem Strom, einer zweiten spiralförmigen Spule, die eine Vielzahl von Windungen aufweist, wobei ein Mittelpunkt der zweiten spiralförmigen Spule zu einer am weitesten außen gelegenen Windung einer zweiten spiralförmigen Spule einen zweiten Querschnitt definiert, wobei die zweite spiralförmige Spule entgegengesetzt gewunden ist relativ zu der ersten spiralförmigen Spule, wobei die ersten und zweiten Spulen im Wesentlichen innerhalb einer gemeinsamen Ebene vorliegen, einen gemeinsamen Mittelpunkt haben und **dadurch gekennzeichnet sind, dass** eine Windungsdistanz von dem gemeinsamen Mittelpunkt zu einer bestimmten Windung entlang des ersten oder zweiten Querschnittes der ersten oder zweiten spiralförmigen Spule derart vorliegt, dass Beabstandungen zwischen aufeinanderfolgenden Windungen der Sendespule von einer am weitesten außen liegenden Windung zu dem gemeinsamen Mittelpunkt zunehmen, so dass eine wechselseitige Induktivität in Bezug auf die Empfangsspule (118, 218, 518), die über oder unter der gemeinsamen Ebene angeordnet ist, größer als 65 % einer maximalen wechselseitigen Induktivität entlang der ersten und zweiten Querschnitte ist, wenn die ersten und zweiten spiralförmigen Spulen positioniert sind, um drahtlos Sendeleistung an die Empfangsspule zu übertragen.

9. Verfahren nach Anspruch 8, wobei die zweite spiralförmige Spule über oder unter der ersten spiralförmigen Spule angeordnet ist oder mit der ersten spiralförmigen Spule verwoben ist.

**10.** Verfahren nach einem der Ansprüche 8 oder 9, wobei eine Gesamtlänge der zweiten spiralförmigen Spule eine gleiche Länge ist wie eine Gesamtlänge der ersten spiralförmigen Spule, und die zweite spiralförmige Spule im Wesentlichen als eine Spiegelung der ersten spiralförmigen Spule gestaltet ist.

**11.** Verfahren nach einem der Ansprüche 8 bis 10, wobei die Windungsdistanz von dem gemeinsamen Mittelpunkt zu einem Mittelpunkt einer bestimmten Windung entlang des ersten oder zweiten Querschnittes der ersten oder zweiten spiralförmigen Spule eine Funktion ist von einer Distanz von dem gemeinsamen Mittelpunkt zu der am weitesten außen liegenden Windung der ersten oder zweiten spiralförmigen Spule, einem ersten Wert, der Beabstandungen zwischen Windungen der ersten oder zweiten spiralförmigen Spule entspricht, einer Summe einer Gesamtanzahl von Windungen der ersten und zweiten spiralförmigen Spulen und einer ersten Zahl, die der bestimmten Windung entspricht.

**12.** Verfahren nach einem der Ansprüche 8 bis 11, wobei das Betreiben der ersten und zweiten spiralförmigen Spulen Betreiben der ersten und zweiten spiralförmigen Spulen mit elektrischem Strom unter Verwendung einer Treiberschaltung (224) aufweist, und die ersten und zweiten spiralförmigen Spulen konfiguriert sind, um elektrisch an die Treiberschaltung (224) gekoppelt zu werden, im Wesentlichen in einer gemeinsamen Ebene angeordnet sind und konfiguriert sind zum drahtlosen Senden von Leistung mit einem Pegel, der ausreichend ist zum Laden oder Betreiben einer Empfängereinrichtung.

**13.** Ein nicht transitorischer Computerspeicher, der ausführbare Programminstruktionen speichert, die eine Vorrichtung zum Senden von drahtloser Leistung an eine Empfangsspule anweisen, das Verfahren nach einem der Ansprüche 9 bis 13 zu implementieren, wenn sie durch ein Verarbeitungsmodul ausgeführt werden.

**14.** Ein Drahtlosleistungssytem (100) zum Senden von drahtloser Leistung an eine Empfangsspule (118, 218, 518), wobei das System die Empfangsspule (118, 218, 518) und weiterhin den Sender nach einem der Ansprüche 1 bis 7 aufweist.

**15.** Drahtlosleistungssytem (100) nach Anspruch 14, wobei die Empfangsspule (118, 218, 518) eine erste Empfangsspule und eine zweite Empfangsspule aufweist.

**Revendications**

**1.** Transmetteur (104, 204, 404, 804) destiné à transmettre de l'énergie sans fil à une bobine de réception (118, 218, 518), comprenant :

une première bobine en spirale comprenant une pluralité de spires, un centre de la première bobine en spirale jusqu'à une spire la plus externe de la première bobine en spirale définissant une première section transversale ; et
une seconde bobine en spirale comprenant une pluralité de spires, un centre de la seconde bobine en spirale jusqu'à une spire la plus externe de la seconde bobine en spirale définissant une seconde section transversale, la seconde bobine en spirale étant contre-enroulée relativement à la première bobine en spirale, dans lequel les première et seconde bobines sont situées sensiblement au sein d'un plan commun, présentant un centre commun, **caractérisé en ce que** :

une distance de spires, du centre commun à une spire spécifique le long de la première ou seconde section transversale de la première ou seconde bobine en spirale, est telle que les espacements entre les spires consécutives de la bobine de transmission augmentent d'une spire la plus externe jusqu'au centre commun, de sorte qu'une inductance mutuelle relativement à la bobine de réception (118, 218, 518) située au-dessus ou au-dessous du plan commun est supérieure à 65 % d'une inductance mutuelle maximale le long des première et seconde sections transversales, lorsque les première et seconde bobines en spirale sont positionnées de manière à transmettre de l'énergie par voie hertzienne à la bobine de réception.

**2.** Transmetteur (804) selon la revendication 1, dans lequel la seconde bobine en spirale est située au-dessus ou au-dessous de la première bobine en spirale ou est entrecroisée avec la première bobine en spirale.

**3.** Transmetteur (804) selon l'une quelconque des revendications précédentes, dans lequel une longueur totale de la seconde bobine en spirale est une longueur identique à une longueur totale de la première bobine en spirale, et la seconde bobine en spirale a sensiblement la forme d'une image reflétée de la première bobine en spirale.

**4.** Transmetteur (804) selon l'une quelconque des revendications précédentes, dans lequel la distance de spires entre le centre commun et le centre d'une spire spécifique le long de la première ou seconde section transversale de la première ou seconde bobine en spirale est en fonction d'une distance entre le centre commun et la spire la plus externe de la première ou seconde bobine en spirale, d'une première value correspondant aux espacements entre les spires de la première ou seconde bobine en spirale, d'une somme d'un nombre total de spires des première et seconde bobines en spirale, et d'un premier nombre correspondant à la spire spécifique.

**5.** Transmetteur (104) selon l'une quelconque des revendications précédentes, dans lequel les première et seconde bobines en spirale peuvent être couplées électriquement à un circuit pilote (224), sensiblement situé sur un plan commun, et configuré de manière à transmettre de l'énergie par voie hertzienne à un niveau suffisant pour charger ou alimenter un dispositif récepteur.

**6.** Transmetteur (104) selon l'une quelconque des revendications précédentes, dans lequel des signaux d'entrée pour les première et seconde bobines en spirale sont configurés de manière à être situés dans une plage de fréquence comprise entre 6,5 mégahertz et 7 mégahertz.

**7.** Transmetteur (104) selon l'une quelconque des revendications précédentes, dans lequel chaque spire des première et seconde bobines en spirale est configurée de manière à présenter un rayon de spire supérieur à un rayon de spire minimal de 5 millimètres.

**8.** Procédé de transmission d'énergie sans fil à une bobine de réception (118, 218, 518), le procédé comprenant les étapes ci-dessous consistant à :

exciter, au moyen d'un courant électrique, une première bobine en spirale comprenant une pluralité de spires, un centre de la première bobine en spirale jusqu'à une spire la plus externe de la première bobine en spirale définissant une première section transversale ; et
exciter, au moyen d'un courant électrique, une seconde bobine en spirale comprenant une pluralité de spires, un centre de la seconde bobine en spirale jusqu'à une spire la plus externe de la seconde bobine en spirale définissant une seconde section transversale, la seconde bobine en spirale étant contre-enroulée relativement à la première bobine en spirale, dans lequel les première et seconde bobines sont situées sensiblement au sein d'un plan commun, présentant un centre commun, et **caractérisé en ce qu'**une distance de spires, du centre commun à une spire spécifique le long de la première ou seconde section transversale de la première ou seconde bobine en spirale, est telle que les espacements entre les spires consécutives de la bobine de transmission augmentent d'une spire la plus externe jusqu'au centre commun, de sorte qu'une inductance mutuelle relativement à la bobine de réception (118, 218, 518) située au-dessus ou au-dessous du plan commun est supérieure à 65 % d'une inductance mutuelle maximale le long des première et seconde sections transversales, lorsque les première et seconde bobines en spirale sont positionnées de manière à transmettre de l'énergie par voie hertzienne à la bobine de réception.

**9.** Procédé selon la revendication 8, dans lequel la seconde bobine en spirale est située au-dessus ou au-dessous de la première bobine en spirale ou est entrecroisée avec la première bobine en spirale.

**10.** Procédé selon la revendication 8 ou 9, dans lequel une longueur totale de la seconde bobine en spirale est une longueur identique à une longueur totale de la première bobine en spirale, et la seconde bobine en spirale a sensiblement la forme d'une image reflétée de la première bobine en spirale.

**11.** Procédé selon l'une quelconque des revendications 8 à 10, dans lequel :

la distance de spires entre le centre commun et un centre d'une spire spécifique le long de la première ou seconde section transversale de la première ou seconde bobine en spirale est en fonction d'une distance entre le centre commun et la spire la plus externe de la première ou seconde bobine en spirale, d'une première value correspondant aux espacements entre les spires de la première ou seconde bobine en spirale, d'une somme d'un nombre total de spires des première et seconde bobines en spirale, et d'un premier nombre correspondant à la spire spécifique.

**12.** Procédé selon l'une quelconque des revendications 8 à 11, dans lequel l'étape d'excitation des première et seconde bobines en spirale comprend l'étape consistant à exciter les première et seconde bobines en spirale au moyen d'un courant électrique en utilisant un circuit pilote (224) ; et
dans lequel les première et seconde bobines en spirale sont configurées de manière à être couplées électriquement au circuit pilote (224), sensiblement situé sur un plan commun, et configuré de manière à transmettre de l'énergie par voie hertzienne à un niveau suffisant pour charger ou alimenter un dispositif récepteur.

**13.** Moyen de stockage informatique non transitoire qui stocke des instructions de programme exécutables qui commandent un appareil pour transmettre de l'énergie sans fil à une bobine de réception en vue de mettre en oeuvre le procédé selon l'une quelconque des revendications 8 à 12, lorsqu'elles sont exécutées par un module de traitement.

14. Un système d'alimentation sans fil (100) pour transmettre de l'énergie sans fil à une bobine de réception (118, 218, 518), le système comprenant la bobine de réception (118, 218, 518) est en outre comprenant le transmetteur selon l'une quelconque des revendications 1 à 7.

15. Le système d'alimentation sans fil (100) selon la revendication 14, dans lequel la bobine de réception (118, 218, 518) comprend une première bobine de réception et une deuxième bobine de réception.

**FIG. 1**

**FIG. 2**

**FIG. 3**

404

406

| 480 | 460 |
| Presence Detector | Enclosed Detector |

Vds

415

470 | Controller | 435 | 416
Memory | | | Rsense

423 | 424 | 408 | 409 | 414
Osc_Enable | Oscillator | PA | Filter | Matching Circuit

**FIG. 4**

508

510

Beacon Detector 516
514 | Processor-Signaling Controller | Charging Control

518

512 | Cloaking-Signaling | 506
520

RX Match-Switch | RF-DC Conv | DC-DC Conv | 522 | Charging Device 550

**FIG. 5**

624

670

+Vcc

L1

I1

n1

L3

C0

C

671

RL

C

n2

L4

C0

L2

I2

672

**FIG. 6**

722

781

782

783

n4

D1

784

n1

1uF

1uF

n3

B1

ng

T

C2

B2

771

D2

C1

n2

**FIG. 7**

**FIG. 8**

EP 2 792 081 B1

FIG. 9

Example cross section line

S₃

S₂

S₁

FIG. 10

FIG. 11

FIG. 12

**FIG. 13**

**FIG. 14**

1500

1502

1504

Normalized M

Position (mm)

**FIG. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011281535 A